# EUROPÄISCHE PATENTANMELDUNG

(11) **EP 1 322 107 A1**
(43) Veröffentlichungstag der Anmeldung: **25.06.2003**
(21) Anmeldenummer: 02022348.3
(22) Anmeldetag: 08.10.2002
(51) Int. Cl.: H04N 5/222

(54) **System und Verfahren zum Verarbeiten von Informationen**

(30) Priorität: 19.12.2001 DE 10162533
(71) Anmelder: n-able communication GmbH & Co. KG, 80797 München (DE)
(72) Erfinder: Veit, Hans-Peter, 80992 München (DE); Grabendörfer, Helmut, 81539 München (DE); Busch, Heidi, 85406 Zolling/Oberappersdorf (DE); Mayer, Alexander, 85406 Zolling/Oberappersdorf (DE)
(74) Vertreter: Schumacher & Willsau

(57) **Zusammenfassung**

Die Erfindung betrifft ein System zum Verarbeiten von Informationen mit Mitteln (10, 12, 14, 26) zum Aufzeichnen von Bild- beziehungsweise Videoinformationen, die eine Kamera (10) umfassen, Mitteln (10, 12, 14, 26) zum Aufzeichnen von Toninformationen simultan zu dem Aufzeichnen der Bild- beziehungsweise Videoinformationen und einem halbdurchlässigen Spiegel (16) zum Darstellen von Informationen auf einer einem Vortragenden (18) zugewandten Fläche (20) des halbdurchlässigen Spiegels (16), wobei die Kamera (10) gegenüber einer von dem Vortragenden (18) abgewandten Fläche (22) des halbdurchlässigen Spiegels (16) angeordnet ist und wobei die darstellbaren Informationen Textinformationen umfassen. Erfindungsgemäß ist vorgesehen, dass die darstellbaren Informationen graphische Informationen umfassen, dass die darstellbaren Informationen eine gespiegelte Darstellung einer Computeranzeige (24) umfassen und dass die Computeranzeige (24) eine gespiegelte herkömmliche Computeranzeige (24) ist. Die Erfindung betrifft weiterhin ein Gehäuse zur Verwendung in einem erfindungsgemäßen System.

## Beschreibung

Die Erfindung betrifft ein System zum Verarbeiten von Informationen mit Mitteln zum Aufzeichnen von Bild- beziehungsweise Videoinformationen, die eine Kamera umfassen, Mitteln zum Aufzeichnen von Toninformationen simultan zu dem Aufzeichnen der Bild- beziehungsweise Videoinformationen und einem halbdurchlässigen Spiegel zum Darstellen von Informationen auf einer einem Vortragenden zugewandten Fläche des halbdurchlässigen Spiegels, wobei die Kamera gegenüber einer von dem Vortragenden abgewandten Fläche des halbdurchlässigen Spiegels angeordnet ist und wobei die darstellbaren Informationen Textinformationen umfassen.

Die Erfindung betrifft weiterhin ein Verfahren zum Verarbeiten von Informationen mit den Schritten: Aufzeichnen von Bild- beziehungsweise Videoinformationen mit einer Kamera; Aufzeichnen von Toninformationen simultan zu dem Aufzeichnen der Bild- beziehungsweise Videoinformationen; und Darstellen von Informationen auf einer einem Vortragenden zugewandten Fläche eines halbdurchlässigen Spiegels, wobei die Kamera gegenüber einer von dem Vortragenden abgewandten Fläche des halbdurchlässigen Spiegels angeordnet ist und wobei die darstellbaren Informationen Textinformationen umfassen.

Die vorstehend genannten gattungsgemäßen Systeme und Verfahren sind bekannt, und sie kommen zahlreich bei Produktionen in der Medienbranche zum Einsatz. Beispielsweise werden bei der Aufzeichnung oder bei der Live-Übertragung von Nachrichtensendungen sogenannte Teleprompter verwendet, die für den Nachrichtensprecher Textinformationen in Blickrichtung auf die aufnehmende Kamera darstellen, so dass der Sprecher auch längere Texte vortragen kann, ohne dass er den Blickkontakt mit dem Zuschauer verliert.

Neben der Präsentation derartiger Vorträge über die klassischen Medien, nämlich das Fernsehen, gewinnt die Verbreitung von Informationen auf anderen Wegen, insbesondere auf der Grundlage der digitalen Datenverarbeitung, zunehmend an Bedeutung. Auf der Grundlage der digitalen Datenverarbeitung erschließen sich Aufzeichnungs-, Verarbeitungs- und Verbreitungswege für Vorträge und Präsentationen, die bei weitem vielfältiger sind als klassische Medienkonzepte.

Beispielsweise ist man bestrebt, das vorhandene Wissen innerhalb von Unternehmen möglichst effizient und zuverlässig zu verbreiten. Hierbei spielen Schlagworte wie Wissensmanagement, E-Learning und Business-TV eine wichtige Rolle. Eine der Grundlagen für die Verbreitung der Informationen sind leistungsfähige Datennetzwerke und Kontakt-Managementsysteme. Weiterhin haben Präsentationsprogramme, wie zum Beispiel Microsoft PowerPoint, einen hohen Stellenwert in der Unternehmenskommunikation eingenommen.

Man ist sich weitgehend einig, dass die Visualisierung eines Vortrags in zahlreicher Hinsicht Vorteile mit sich bringt, beispielsweise, was die Aufnahmefähigkeit oder die Merkfähigkeit der Informationen bei den Zuhörern beziehungsweise Zuschauern betrifft.

Gegenüber einem im herkömmlichen Stil gehaltenen Vortrag, der sich auf das gesprochene Wort beschränkt, haben visuell unterstützte Präsentationen aber auch gewisse Nachteile. Der auf eine Rede beschränkte Vortrag lässt sich in gedruckter Form aufbewahren, so dass er für ständigen Zugriff zur Verfügung steht. Eine Präsentation hingegen, die vom Wechselspiel der Rede mit optischen Eindrücken lebt, ist ein einmaliges Ereignis. Ein späterer erneuter Zugriff auf die Informationen beziehungsweise auf die Kombination der verschiedenen Informationsarten, ist für den Empfänger der Informationen nicht mehr ohne Weiteres möglich.

Auf der Grundlage der digitalen Datenverarbeitung stehen heutzutage also nahezu unbegrenzte Möglichkeiten für die Verarbeitung von Informationen zur Verfügung; es fehlt jedoch an Systemen und Verfahren, die diese Informationen in Anlehnung an klassische Präsentationskonzepte zunächst zusammenstellen und nachfolgend für eine beliebige Anzahl von Empfängern verfügbar machen. Dabei ist insbesondere zu betonen, dass diese fehlenden Systeme und Verfahren dem Alltagsgeschäft zugänglich sein sollen; aufwendige Filmproduktionen und deren Verfügbarmachung im Datennetzwerk genügen dieser Anforderung der Einfachheit nicht.

Der Erfindung liegt die **Aufgabe** zugrunde, ein System und ein Verfahren zur Verfügung zu stellen, die die aufgezeigten Probleme des Standes der Technik lösen und die insbesondere eine kostengünstige und überschaubare Lösung zum Aufzeichnen und zum Verfügbarmachen von Videopräsentationen bieten.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen System dadurch auf, dass die darstellbaren Informationen graphische Informationen umfassen, dass die darstellbaren Informationen eine gespiegelte Darstellung einer Computeranzeige umfassen und dass die Computeranzeige eine gespiegelte herkömmliche Computeranzeige ist. Zur Aufzeichnung von derartigen Präsentationen, die im Rahmen von "Video on Demand (VoD)" abgerufen werden können, bei denen Bild, Ton und sonstige Informationen kombiniert werden und die im vorliegenden Zusammenhang unter dem Begriff Videopräsentationen zusammengefasst werden, ist es somit möglich, einen Vortrag durch die Erstellung entsprechender Dateien auf einem Computer vorzubereiten und diese auf dem Computer aufgezeichneten Informationen während der Aufzeichnung des Vortrags abzurufen und zu betrachten. Der Vortrag wird gleichzeitig aufgezeichnet und kann später, gegebenenfalls nach einer erforderlichen Nachbearbeitung, jederzeit wieder betrachtet werden. Insbesondere ist von Vorteil, dass neben Textinformationen graphische Informationen während der Aufzeichnung des Vortrags dargestellt werden können; der Vortragende kann auf diese Weise detailliert auf Präsentationsmerkmale eingehen, die auch für den Betrachter des Vortrages sichtbar sind.

Es ist von besonderem Vorteil, dass die Mittel zum Aufzeichnen digitale Informationen aufzeichnen. Diese können in einfacher Weise weiterverarbeitet werden, wobei insbesondere herkömmliche Software aber auch speziell für die jeweiligen Aufgaben entwickelte Software zum Einsatz kommen kann.

Das erfindungsgemäße System ist in nützlicher Weise dadurch weitergebildet, dass die digitalen Informationen auf einem Magnetband in einer digitalen Kamera aufgezeichnet werden. Hierdurch wird auf der Grundlage eines herkömmlichen und kostengünstigen Speichermediums sowie auf der Grundlage bekannter Technologien ein zuverlässiges und Speichern mit ausreichender Speicherkapazität zur Verfügung gestellt.

Es kann aber auch von Vorteil sein, dass die Computeranzeige einem Computer zugeordnet ist, der gleichzeitig zum digitalen Aufzeichnen und Verarbeiten der Bild- bzw. Videoinformationen und der Toninformationen dient. Derselbe Computer kann dann die von einer Digitalkamera gelieferten Bilder aufzeichnen und verarbeiten und insbesondere mit den zuvor im Computer gespeicherten Informationen zu einer Videopräsentation kombinieren.

Das erfindungsgemäße System ist besonders dadurch vorteilhaft, dass die Bild- beziehungsweise Videoinformationen Darstellungen des Vortragenden umfassen. Der Vortragende der gespiegelten Informationen, also der Vortragende der Präsentation, wird im Allgemeinen während der Videopräsentation als Vortragender zu erkennen sein. Andere Informationen, beispielsweise beliebige Grafiken, können parallel zu dem Vortragenden in der Videopräsentation dargestellt werden, so dass stets der Vortragende und nahezu beliebige andere Informationen dargestellt werden können. Die vorliegende Erfindung ist jedoch nicht auf die Darstellung des Vortragenden während der Videopräsentation beschränkt. Vielmehr kann der "Bild/Videokanal" des Systems auch zur Darstellung anderer Bilder verwendet werden.

Das erfindungsgemäße System ist besonders dadurch nützlich, dass die Toninformationen von dem Vortragenden gesprochene Wortinformationen umfassen. Dies ist der Standardfall. Beim Abspielen der Videopräsentation wird man somit den Vortragenden sehen, die Worte des Vortragenden hören und gleichzeitig beliebige andere dargestellte Informationen betrachten können. Der "Tonkanal" des Systems kann aber auch auf andere Weise genutzt werden, beispielsweise, wenn es um die Übermittlung sonstiger akustischer Informationen geht, etwa Musik oder Maschinengeräusche.

Nützlicherweise ist die Computeranzeige ein TFT-Display. Derartige Flachbildschirme haben sich als eine zuverlässig arbeitende Technologie erwiesen, die insbesondere durch ihre Prägnanz und ihren geringen Platzbedarf ausgezeichnet ist. Der Vortragende kann während der Aufzeichnung der Präsentation also ein klares Bild von Informationen erkennen, die ihm beim Vortrag helfen; ebenso ist ein TFT-Display bei transportablen Ausführungsformen des erfindungsgemäßen Systems besonders nützlich.

Insbesondere ist das erfindungsgemäße System dadurch in vorteilhafter Weise weitergebildet, dass die Toninformationen unter Verwendung eines Funkmikrofons und eines Funkempfängers zu den Mitteln zum Aufzeichnen von Toninformationen übertragen werden. Der Vortragende kann sich somit während des Vortrags frei bewegen, und er ist nicht an eine bestimmte Position in Bezug auf die Aufzeichnungseinrichtung gebunden. In den meisten Fällen wird er allerdings an den Bildausschnitt der vorzugsweise starr installierten Kamera gebunden sein.

In besonderer Weise ist das System dadurch vorteilhaft weiterentwickelt, dass eine Promptersoftware vorgesehen ist, die durch eine Computermaus gesteuert werden kann. Diese Steuerung kann sowohl von dem Vortragenden selbst als auch von einem Dritten vorgenommen werden. Während des Vortrags kann der Vortragende so beispielsweise von einer grafischen Darstellung zur nächsten grafischen Darstellung umschalten, ebenso oder ganz ähnlich wie dies während des Vortrags erfolgen würde. Der Vortragende hat dann die entsprechenden Informationen und vorzugsweise auch die entsprechenden Texte vor Augen, wobei er sich im Hinblick auf seine Vortragsgeschwindigkeit nicht von vorher festgelegten Abfolgesequenzen abhängig machen muss. Er kann vielmehr ganz nach seinem eigenen Stil während der Aufzeichnung den Vortrag gestalten und dennoch stets die richtigen Informationen vor Augen haben.

In diesem Zusammenhang ist es von besonderem Vorteil, dass über die Computermaus unter Vermittlung der Promptersoftware Eingangssignale für die Mittel zum Aufzeichnen zur Verfügung gestellt werden können. Wie erwähnt, sind bevorzugte Darstellungen, die auf dem halbdurchlässigen Spiegel dargestellt werden, genau die Darstellungen, die auch dem Betrachter der Videopräsentation zugänglich gemacht werden sollen. Geht der Vortragende nun per Mausklick von einer Grafik zur nächsten über, so ist es nützlich, dass auch beim nachfolgenden Betrachten der Videopräsentation ein Übergang zu diesem Zeitpunkt stattfindet. Dadurch, dass über die Computermaus direkt Signale für solche Übergänge zur Verfügung gestellt werden können, wird die weitere Nachbearbeitung der Videopräsentation im Hinblick auf diese Übergänge erheblich vereinfacht.

Das erfindungsgemäße System ist in besonders vorteilhafter Weise dadurch weitergebildet, dass der halbdurchlässige Spiegel, die Computeranzeige, die Kamera und der Funkempfänger während des Betriebs in einem gemeinsamen Gehäuse angeordnet sind, dass das Funkmikrofon, die Computermaus und der Computer während des Betriebs außerhalb des Gehäuses angeordnet sind und dass das Gehäuse in einem umgebauten Zustand als Koffer dient, der zumindest einen Teil der für den Betrieb erforderlichen Komponenten aufnehmen kann. Hierdurch ist das erfindungsgemäße System besonders flexibel. Es ist an beliebigen Orten einsetzbar, da die wesentlichen Systemkomponente alle innerhalb eines Koffers Platz finden. Während des Betriebs dient der Koffer dann weiterhin zur Aufnahme von zumindest einem Teil der Komponenten, so dass aufwendige zusätzliche Installationseinrichtungen nicht benötigt werden.

In einer besonders bevorzugten Ausführungsform ist das erfindungsgemäße System dadurch weitergebildet, dass das Gehäuse abnehmbare Deckel aufweist, so dass im abgenommenen Zustand der Deckel der Blick auf den halbdurchlässigen Spiegel und der Zugriff auf die Kamera freigegeben sind. Auf diese Weise ist das geschlossene Gehäuse beziehungsweise der verschlossene Koffer bequem und schnell in einem betriebsbereiten Zustand überführbar. Es müssen lediglich ein vorderer und ein hinterer Deckel abgenommen werden, um das System rasch in erfindungsgemäßer Weise nutzen zu können.

Insbesondere ist nützlich, dass die abnehmbaren Deckel Fächer aufweisen und dass die Fächer durch Abdeckklappen abdeckbar sind. In den abnehmbaren Deckel können somit Komponenten aufgenommen werden, die während des Betriebs des Systems außerhalb des Gehäuses angeordnet sind, beispielsweise das Funkmikrofon und die Computermaus. Ebenfalls können die Fächer der Aufnahme von Kabeln und sonstigen Komponenten dienen, die für den Aufbau des Systems erforderlich sind beziehungsweise als Ersatzteile dienen können.

Insbesondere ist es nützlich, dass ein Raum zwischen Kamera und halbdurchlässigem Spiegel gegen Lichteinfall auf anderem Wege als durch den Spiegel geschützt ist. Hierdurch werden störende Reflexionen im Bereich der Digitalkamera vermieden, was zum Beispiel durch eine schwarze Auskleidung des äußeren Gehäuses bewerkstelligt werden kann.

Es kann vorgesehen sein, dass aufgezeichnete Informationen mittels einer Videobearbeitungssoftware bearbeitet werden. Eine solche Nachbearbeitung betrifft beispielsweise das "Schneiden" der Aufzeichnung. Der Vortragende muss so während seines Vortrags keine endgültigen Sequenzen liefern. Vielmehr können Vortragsteile zum Beispiel mehrfach durchlaufen werden, wobei im Anschluss die Bearbeitung mittels Bearbeitungssoftware erfolgt.

Weiterhin ist nützlich, dass durch die Videobearbeitungssoftware bearbeitete Informationen mittels einer Videokompressionssoftware komprimiert werden. Auf diese Weise wird die letztlich zu speichernde Datenmenge, angepasst an die üblichen Darstellungsformate auf herkömmlichen Computerbildschirmen, reduziert.

Vorzugsweise ist das System so gestaltet, das eine Generatorsoftware zum Erzeugen einer Präsentation aus den aufgezeichneten Bild- beziehungsweise Videoinformationen, den aufgezeichneten Toninformationen und zusätzlichen Informationen vorgesehen ist. Der Anwender muss allein die entsprechenden Video- und Grafikdateien importieren, wenn gewünscht Modifikationen vornehmen und ein Layout auswählen. Die Generatorsoftware generiert daraus einen Dateiensatz mit der abspieltauglichen Videopräsentation. Modifikationen an den importierten Dateien können beispielsweise das Ändern von Grafiken oder das Eingeben von Überschriften zu Grafiken umfassen.

Die Erfindung baut auf dem gattungsgemäßen Verfahren dadurch auf, dass die darstellbaren Informationen graphische Informationen umfassen, dass die darstellbaren Informationen eine gespiegelte Darstellung einer Computeranzeige umfassen und dass die Computeranzeige eine gespiegelte herkömmliche Computeranzeige ist. Auf diese Weise werden die Vorzüge und Besonderheiten des erfindungsgemäßen Systems auch im Rahmen eines Verfahrens umgesetzt. Dies gilt auch für die nachfolgend angegebenen besonderes vorteilhaften Ausführungsformen des erfindungsgemäßen Verfahrens.

Dieses ist in nützlicher Weise dadurch weitergebildet, dass die Mittel zum Aufzeichnen digitale Informationen aufzeichnen.

Ebenfalls ist es besonders nützlich, dass die digitalen Informationen auf einem Magnetband in einer digitalen Kamera aufgezeichnet werden.

Weiterhin ist es besonders bevorzugt, dass die Computeranzeige einem Computer zugeordnet ist, der gleichzeitig zum digitalen Aufzeichnen und Verarbeiten der Bild- bzw. Videoinformationen und der Toninformationen dient.

Im Rahmen des erfindungsgemäßen Verfahrens ist es bevorzugt, dass als Computeranzeige ein TFT-Display verwendet wird.

Das erfindungsgemäße Verfahren ist in besonders nützlicher Weise dadurch weitergebildet, dass die Toninformationen unter Verwendung eines Funkmikrofons und eines Funkempfängers zum Zwecke des Aufzeichnens von Toninformationen übertragen werden.

Dabei kann das Verfahren so ausgelegt sein, dass eine Promptersoftware vorgesehen ist, die durch eine Computermaus gesteuert werden kann.

In diesem Zusammenhang ist es besonders nützlich, dass über die Computermaus unter Vermittlung der Promptersoftware Signale für die Aufzeichnung zur Verfügung gestellt werden können.

Es ist von besonderem Vorteil, dass aufgezeichnete Informationen mittels einer Videobearbeitungssoftware bearbeitet werden.

Ferner wird als besonders nützlich erachtet, dass durch die Videobearbeitungssoftware bearbeitete Informationen mittels einer Videokompressionssoftware komprimiert werden.

Das erfindungsgemäße Verfahren ist weiterhin dadurch von besonderem Vorteil, dass eine Generatorsoftware zum Erzeugen einer Präsentation aus den aufgezeichneten Bild- beziehungsweise Videoinformationen, den aufgezeichneten Toninformationen und zusätzlichen Informationen vorgesehen ist.

Der Erfindung liegt die Erkenntnis zugrunde, dass unter Verwendung digitaler Datenverarbeitungstechnologien eine kostengünstige und dennoch äußerst flexible und zuverlässig arbeitende Strategie zum Erstellen von Videopräsentationen zur Verfügung gestellt werden kann. Die aufgezeichneten Videopräsentationen können über beliebige elektronische Medien, vorzugsweise über Netzwerke oder über Speichermedien, wie CD-Roms, verbreitet werden. Neben der Aufzeichnungseinrichtung sind die Promptersoftware, die Verarbeitungseinrichtung und die Generatorsoftware wichtige Komponenten. Durch die Promptersoftware können die Präsentationsunterlagen in der Aufzeichnungseinrichtung angezeigt werden, wobei es besonders nützlich ist, dass auch der Sprechertext in beliebiger Form dargestellt werden kann. Die Verarbeitungseinrichtung ist in Form eines Computers realisiert, der die Videodaten erstellt und für die Videopräsentationen konfektioniert. Die Ausstattung der Verarbeitungseinrichtung umfasst vorzugsweise eine Video-Capture-Grafikkarte, Speichermedien, ein Video-Schnittprogramm, ein Programm zur Komprimierung der Videodaten in streamingtaugliche Formate sowie die Generatorsoftware. Diese erstellt Videopräsentationen aus Video- und Grafikdateien.

Die Erfindung wird nun mit Bezug auf die begleitenden Zeichnungen anhand bevorzugter Ausführungsformen beispielhaft erläutert.

Dabei zeigt:
Figur 1 eine schematische Darstellung eines erfindungsgemäßen Systems;
Figur 2 eine perspektivische Vorderansicht eines Gehäuses zur Aufnahme von Systemkomponenten;
Figur 3 eine perspektivische Rückansicht eines Gehäuses zur Aufnahme von Systemkomponenten;
Figur 4 eine seitliche Schnittansicht eines Gehäuses zur Aufnahme von Systemkomponenten;
Figur 5 einen Gehäusedeckel in abgenommenem Zustand in perspektivischer Ansicht;
Figur 6 einen weiteren Gehäusedeckel in abgenommenem Zustand in perspektivischer Ansicht; und
Figur 7 ein Flussdiagramm eines erfindungsgemäßen Verfahrens.

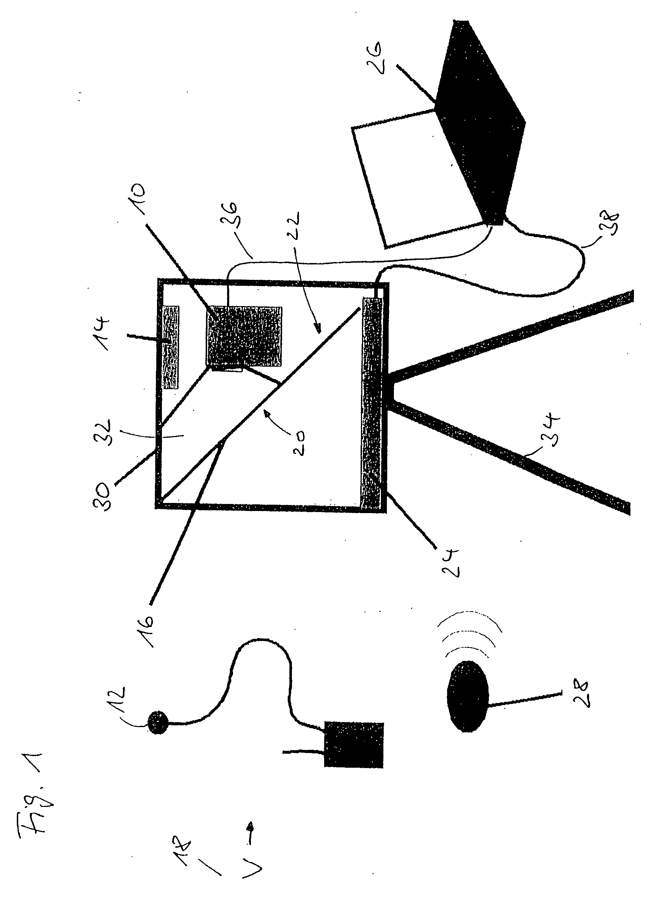

Figur 1 zeigt eine schematische Darstellung eines erfindungsgemäßen Systems. In einem Gehäuse 30 sind verschiedene Komponenten angeordnet, die im Rahmen des erfindungsgemäßen Systems angewendet werden. Das Gehäuse 30 wird von einem Stativ 34 getragen. In einem Winkel von circa 45 Grad zur Vertikalen ist ein halbdurchlässiger Spiegel 16 angeordnet. Auf einer einem Vortragenden 18 abgewandten Seite 22 des halbdurchlässigen Spiegels 16 ist eine Digitalkamera 10 angeordnet. Die Digitalkamera 10 ist über eine Datenleitung 36 mit einem außerhalb des Gehäuses 30 angeordneten Computer 26 verbunden. Auf einer dem Vortragenden 18 zugewandten Seite 20 des halbdurchlässigen Spiegels 16 ist ein TFT-Display 24 mit gespiegelter Anzeige angeordnet. Dieses TFT-Display 24 ist über eine weitere Datenleitung 38 mit dem Computer 26 verbunden. Weiterhin ist innerhalb des Gehäuses 30 ein Funkempfänger 14 vorgesehen, der in der vorliegenden Darstellung auf der dem Vortragenden 18 abgewandten Seite 22 des halbdurchlässigen Spiegels 16 angeordnet ist. Ebenso könnte der Funkempfänger 14 an anderer Stelle angeordnet sein. Weitere, außerhalb des Gehäuses 30 angeordnete Komponenten des erfindungsgemäßen Systems sind ein Mikrofon 12 mit Funksender sowie eine Computermaus 28, die vorzugsweise über eine Funkverbindung mit dem Computer 26 kommunizieren kann.

Das erfindungsgemäße System arbeitet wie folgt. Durch die Computeranzeige 24 können unterschiedliche Informationen auf die dem Vortragenden 18 zugewandte Seite 20 des halbdurchlässigen Spiegels 16 projiziert werden, so dass der Vortragende 18 diese sehen kann. Diese Informationen werden über die Datenleitung 38 von dem Computer 26 geliefert. Gleichzeitig werden Bilder des Vortragenden 18 durch die Digitalkamera 10 aufgenommen. Um eine optimale Aufnahmequalität zu gewährleisten, ist der Raum 32 hinter dem halbdurchlässigen Spiegel 16 gegen Streulicht abgeschirmt, so dass es nicht zu störenden Reflexionen kommt. Auf der Computeranzeige 24 und somit auf der dem Vortragenden 18 zugewandten Seite 20 des halbdurchlässigen Spiegels 16 können Folien, beispielsweise Microsoft PowerPoint-Folien dargestellt werden, es kann Fließtext dargestellt werden, der während des Vortrags gesprochen werden soll, oder es kann eine Kombination von Beidem dargestellt werden. Die von dem Vortragenden 18 gesprochenen Texte werden über das Mikrofon 12 beziehungsweise die Sendeeinrichtung an die Empfangseinrichtung 14 übermittelt. Die Bild- beziehungsweise Videoinformationen und die Toninformationen können auf einem Magnetband in der Digitalkamera 10 gespeichert werden. Weiterhin können über die Datenleitung 36 Indexinformationen von dem Computer zu der Digitalkamera 10 übertragen werden, wobei diese Indexinformationen insbesondere mit den Folienwechseln der Microsoft PowerPoint-Folien abhängen und durch die Computermaus gesteuert werden. Gemäß einer anderen Ausführungsform der vorliegenden Erfindung ist es möglich, die Bild- beziehungsweise Videoinformationen und die Toninformationen über die Datenleitung 36 direkt dem Computer 26 zuzuführen und dort zu speichern.

Es ist besonders bevorzugt, dass der Vortragende 18 selbst während des Vortrags die Computermaus 28 bedient, um so einerseits zu bestimmen, dass ein Wechsel in der Darstellung der Computeranzeige 24 stattfindet, und andererseits der Verarbeitungseinrichtung ein Signal zur Verfügung zu stellen, das zur Protokollierung der Folienwechsel bezüglich des aufgezeichneten gesprochenen Vortrags dient. Dabei wird ein Index auf der Aufzeichnung erzeugt. Hierdurch liegt eine Zeitinformation vor, die es ermöglicht, bei späterem Abspielen der Videopräsentation zum richtigen Zeitpunkt die Folien synchronisiert mit dem Vortrag der vortragenden Person zu wechseln.

Insgesamt handelt es sich bei der Aufzeichnungseinrichtung um eine mobile Lösung. Das Gehäuse 30 ist als Koffer ausgelegt, der die meisten der genannten Komponenten aufnehmen kann. Der Koffer hat vorzugsweise zwei abnehmbare Deckel, wobei ein Deckel, wenn er abgenommen wird, den Blick des Vortragenden 18 auf den Spiegel 16 freigibt. Nimmt man den anderen Deckel ab, so wird der Zugriff zur Kamera 18 gestattet. Innerhalb der Deckel ist vorzugsweise Schaumstoff angeordnet, worin Ausnehmungen vorgesehen sind. In diesen Ausnehmungen des Schaumstoffs können beispielsweise Kabel, Bedienungsanleitungen und Funksender untergebracht werden. Dies ist mit Bezug auf die nachfolgend beschriebenen Figuren im Einzelnen beschrieben.

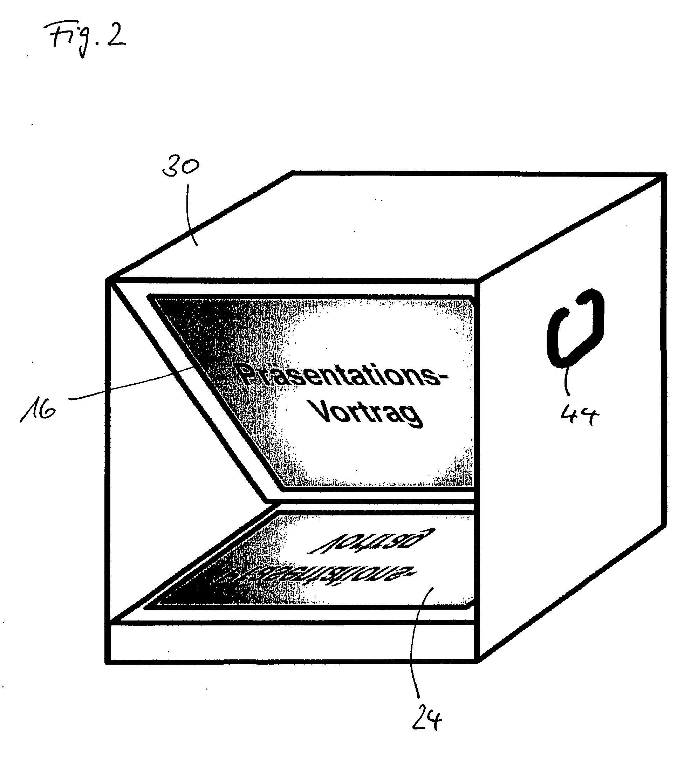

Figur 2 zeigt eine perspektivische Vorderansicht eines Gehäuses zur Aufnahme von Systemkomponenten. In dem Gehäuse 30 sind bei abgenommenem (nicht dargestelltem) Vorderdeckel der halbdurchlässige Spiegel 16 und das TFT-Display 24 erkennbar. Das Gehäuse 30 weist an beiden Seitenteilen je einen Griff 44 auf, so dass es in einfacher Weise transportiert werden kann. Das Gehäuse 30 ist vorzugsweise aus doppelwandigem Aluminium aufgebaut, so dass es beim Transport auftretenden äußeren Einflüssen standhält.

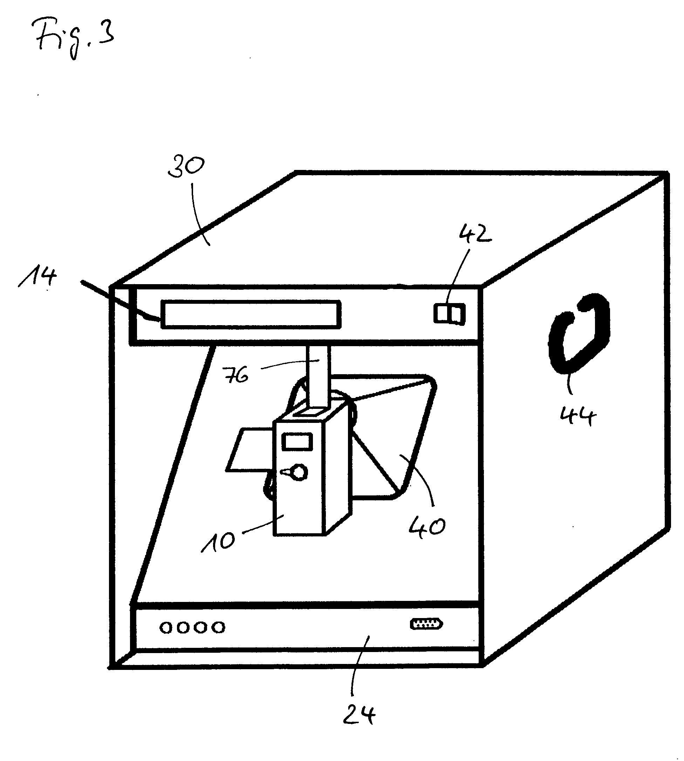

Figur 3 zeigt eine perspektivische Rückansicht eines Gehäuses zur Aufnahme von Systemkomponenten. In dieser Ansicht ist bei abgenommenem Deckel die Digitalkamera 10 zu erkennen, so dass insbesondere ein Zugriff auf die Kamera 10 ermöglicht wird. Die Digitalkamera 10 ist über eine Halterung 76 an oberhalb der Kamera 10 angeordneten, im Gehäuse vorgesehenen Komponenten befestigt. Oben im Gehäuse ist weiterhin der Funkempfänger 14 angeordnet sowie der Netzanschluss mit Hauptschalter 42. Unten im Gehäuse ist das TFT-Display 24 mit Anschlussbuchse und Steuerungselementen angeordnet. Bei der dargestellten Ausführungsform ist der halbdurchlässige Spiegel 16 in dieser Ansicht gemäß Figur 3 nicht erkennbar, da er von einer Verkleidung 40 abgedeckt ist, die eine Aussparung für das Objektiv der Kamera 10 aufweist. Auf diese Weise wird verhindert, dass Streulicht zur Kamera gelangt.

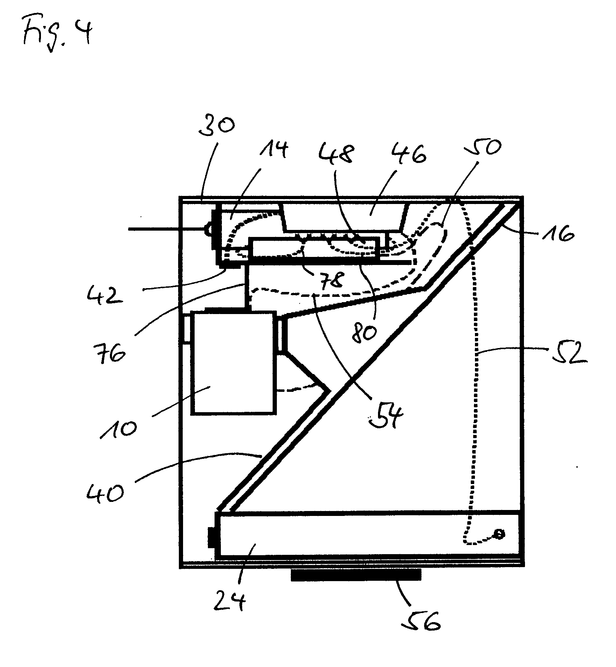

Figur 4 zeigt eine seitliche Schnittansicht eines Gehäuses zur Aufnahme von Systemkomponenten. Hier ist deutlich zu erkennen, dass die Abdeckung 40 den gesamten rückwärtigen Bereich des halbdurchlässigen Spiegels 16 abdeckt, um auf diese Weise Streulichteffekte zu minimieren. Im oberen Bereich des Gehäuses ist eine Steckerleiste 46 vorgesehen, die mit dem Netzanschluss 42 verbunden ist und die elektrischen Verbraucher in dem Gehäuse mit Spannung versorgt. Das TFT-Display 24 ist über eine Spannungsversorgungsleitung 52 mit der Steckerleiste 46 verbunden. Das Netzteil 48 für die Digitalkamera 10 ist über eine Spannungsversorgungsleitung 78 mit der Steckerleiste 46 verbunden. Der Funkempfänger 14, an dem eine Antenne angebracht ist, ist über die Spannungsversorgungsleitung 80 mit der Steckerleiste verbunden. Das Netzteil 48 der Digitalkamera 10 ist mit dieser über eine Spannungsversorgungsleitung 50 verbunden. Weiterhin ist eine Verbindungsleitung 54 zwischen dem Funkempfänger und der Digitalkamera dargestellt, über die der Digitalkamera 10 Audioinformationen zugeleitet werden können. An der unteren Seite des Gehäuses 30 ist eine Platte 56 mit einem Stativgewinde angebracht.

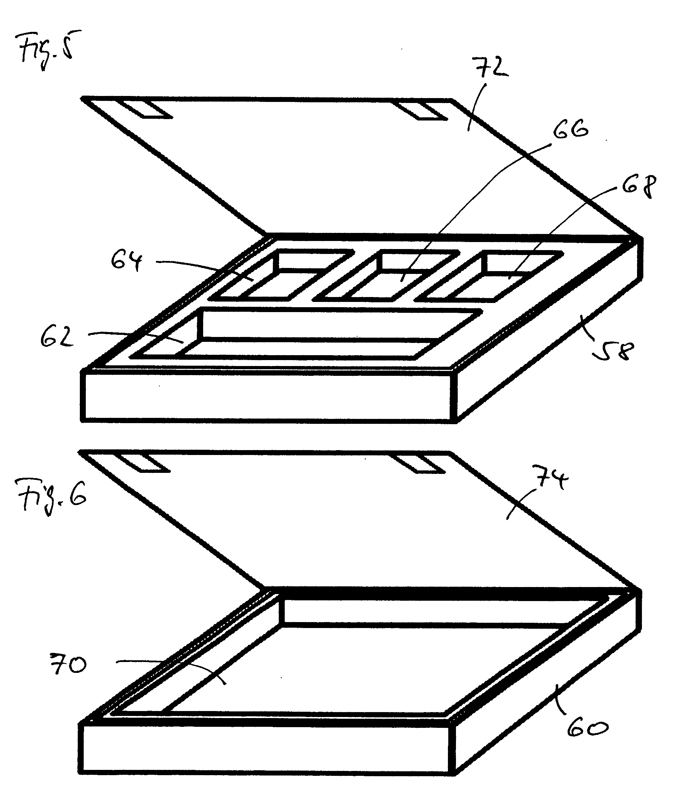

Figur 5 zeigt einen Gehäusedeckel in abgenommenem Zustand in perspektivischer Ansicht. Der abnehmbare Deckel 58, der beispielsweise das Gehäuse 30 an der in Figur 2 dargestellten offenen Seite beziehungsweise an der in Figur 3 dargestellten offenen Seite abschließen kann, hat in seinem Inneren mehrere Fächer 62, 64, 66, 68, die verschiedenste Komponenten aufnehmen können, beispielsweise die Computermaus 28 oder das Mikrofon 12 und den zugehörigen Sender. Ebenfalls können beispielsweise Kabel und sonstiges Zubehör aufgenommen werden. Die Fächer 62, 64, 66, 68 sind als Aussparungen in einem Schaumstoff ausgebildet, so dass ein stoßsicherer Transport der Komponenten ermöglicht ist.

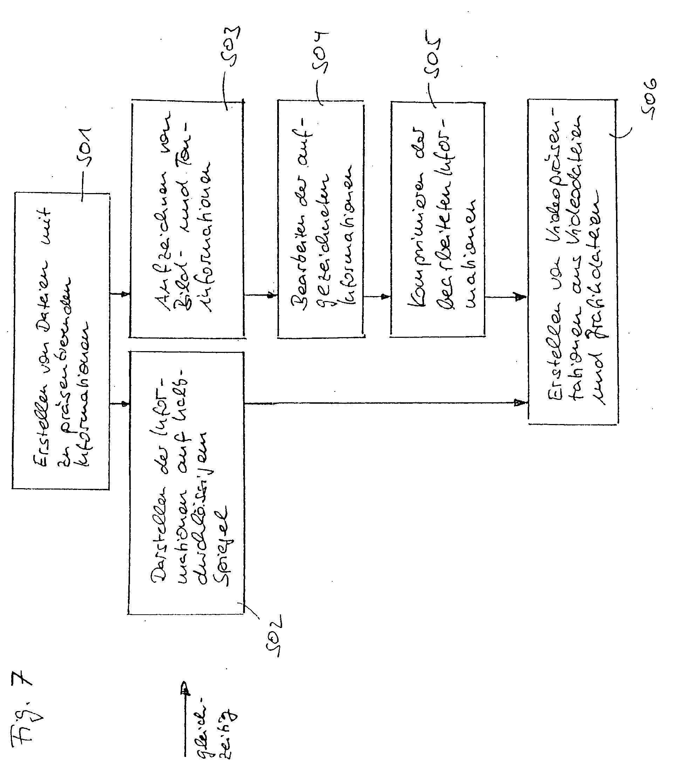

Figur 6 zeigt einen weiteren Gehäusedeckel in abgenommenem Zustand in perspektivischer Ansicht. Auch der in Figur 6 dargestellte Deckel 60 kann entweder zum Abdecken der in Figur 3 dargestellten Rückseite des Gehäuses 30 oder der in Figur 2 dargestellten Vorderseite des Gehäuses verwendet werden. Auch in diesem Deckel 60 ist ein Fach 70 vorgesehen, um in diesem Fall größere Komponenten aufzunehmen. Auch diese Aussparung 70 ist vorzugsweise mit Schaumstoff gepolstert.

Figur 7 zeigt ein Flussdiagramm eines erfindungsgemäßen Verfahrens. In Schritt S01 werden Dateien mit zu präsentierenden Informationen erstellt. Diese Aufgabe kann von einer beliebigen Person, beispielsweise von dem Vortragenden, zu einem beliebigen Zeitpunkt vor dem Aufzeichnen der Bild- und Toninformationen wahrgenommen werden.

Während der Aufzeichnung werden in Schritt S02 Informationen abgerufen, die zuvor gespeichert wurden, und auf einem halbdurchlässigen Spiegel mittels einer Promptersoftware dargestellt. In Schritt S03 werden Bild- beziehungsweise Videoinformationen und Toninformationen aufgezeichnet. Die Schritte S02 und S03 finden gleichzeitig statt.

Im Anschluss an Schritt S03 können die aufgezeichneten Informationen in Schritt S04 mittels einer Videobearbeitungssoftware bearbeitet werden; beispielsweise erfolgt ein "Schneiden" der Bildsequenzen.

Nachfolgend kann in Schritt S05 noch eine Komprimierung der bearbeiteten Informationen mittels einer Videokompressionssoftware erfolgen. Auf diese Weise kann die zu speichernde Datenmenge reduziert werden und beispielsweise den Bedürfnissen für eine Anzeige in einem relativ kleinen Fenster eines Computerbildschirms angepasst werden.

Im Anschluss an die Schritte S02 und S05 wird in Schritt S06 eine Videopräsentation aus Videodateien und Grafikdateien mittels einer Generatorsoftware erstellt.

Das fertige Produkt kann in unterschiedlichsten Ausprägungen realisiert sein. Beispielsweise können auf dem Bildschirm als Grundelemente ein Videofenster, aus dem der Vortragende zu dem Betrachter spricht, ein Bereich für grafische Präsentationen neben dem Videofenster und ein Inhaltsverzeichnis vorgesehen sein. Die Anordnung dieser Elemente auf dem Bildschirm lässt sich frei an die individuellen Gestaltungsvorstellungen anpassen. Die Standard-Videosteuerung, die über Software-Buttons auf dem Bildschirm vorgenommen werden kann, bietet die Funktionen Abspielen, Pause, Stop sowie die Lautstärkeregelung. Mit einem Slider kann das Video vor und zurück gespult werden. Jeder Themenpunkt innerhalb einer Präsentation kann über das Inhaltsverzeichnis direkt angesprungen werden. Die Synchronisation von Video und Folien bleibt immer gewährleistet.

Ebenso ist es aber denkbar, dass vollständig andere Zusammenstellungen der Informationen beim Abspielen der Videopräsentation erzeugt werden. Will man beispielsweise auf das Zeigen von Grafiken verzichten, so kann das System dennoch genutzt werden. In diesem Fall wählt man vorzugsweise einen vergrößerten Bildbereich, ohne für Grafikpräsentationen reservierte zusätzliche Bereiche zu wählen. Diese und beliebige andere vereinfachte oder auch aufwendigere Lösungen liegen im Rahmen der vorliegenden Erfindung.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. System zum Verarbeiten von Informationen mit
- Mitteln (10, 12, 14, 26) zum Aufzeichnen von Bild- beziehungsweise Videoinformationen, die eine Kamera (10) umfassen,
- Mitteln (10, 12, 14, 26) zum Aufzeichnen von Toninformationen simultan zu dem Aufzeichnen der Bild- beziehungsweise Videoinformationen und
- einem halbdurchlässigen Spiegel (16) zum Darstellen von Informationen auf einer einem Vortragenden (18) zugewandten Fläche (20) des halbdurchlässigen Spiegels (16), wobei die Kamera (10) gegenüber einer von dem Vortragenden (18) abgewandten Fläche (22) des halbdurchlässigen Spiegels (16) angeordnet ist und
- wobei die darstellbaren Informationen Textinformationen umfassen,
**dadurch gekennzeichnet,**
- **dass** die darstellbaren Informationen graphische Informationen umfassen,
- **dass** die darstellbaren Informationen eine gespiegelte Darstellung einer Computeranzeige (24) umfassen und
- **dass** die Computeranzeige (24) eine gespiegelte herkömmliche Computeranzeige (24) ist.

2. System nach Anspruch 1, **dadurch gekennzeichnet, dass** die Mittel zum Aufzeichnen digitale Informationen aufzeichnen.

3. System nach Anspruch 2, **dadurch gekennzeichnet, dass** die digitalen Informationen auf einem Magnetband in einer digitalen Kamera (10) aufgezeichnet werden.

4. System nach Anspruch 2, **dadurch gekennzeichnet, dass** die Computeranzeige (24) einem Computer (26) zugeordnet ist, der gleichzeitig zum digitalen Aufzeichnen und Verarbeiten der Bild- bzw. Videoinformationen und der Toninformationen dient.

5. System nach einem der vorangehenden Ansprüche, **dadurch gekennzeichnet, dass** die Computeranzeige (24) ein TFT-Display ist.

6. System nach einem der vorangehenden Ansprüche, **dadurch gekennzeichnet, dass** die Toninformationen unter Verwendung eines Funkmikrofons (12) und eines Funkempfängers (14) zu den Mitteln (10, 12, 14, 26) zum Aufzeichnen von Toninformationen übertragen werden.

7. System nach einem der vorangehenden Ansprüche, **dadurch gekennzeichnet, dass** eine Promptersoftware vorgesehen ist, die durch eine Computermaus (28)gesteuert werden kann.

8. System nach einem der vorangehenden Ansprüche, **dadurch gekennzeichnet, dass** über die Computermaus (28) unter Vermittlung der Promptersoftware Signale für die Mittel zum Aufzeichnen zur Verfügung gestellt werden können.

9. System nach einem der vorangehenden Ansprüche, **dadurch gekennzeichnet,**
- **dass** der halbdurchlässige Spiegel (16), die Computeranzeige (24), die Kamera (10) und der Funkempfänger (14) während des Betriebs in einem gemeinsamen Gehäuse (30) angeordnet sind,
- **dass** das Funkmikrofon (12), die Computermaus (28) und der Computer (26) während des Betriebs außerhalb des Gehäuses (30) angeordnet sind und
- **dass** das Gehäuse (30) in einem umgebauten Zustand als Koffer dient, der zumindest einen Teil der für den Betrieb erforderlichen Komponenten aufnehmen kann.

10. System nach Anspruch 9, **dadurch gekennzeichnet, dass** das Gehäuse (30) abnehmbare Deckel (58, 60) aufweist, so dass im abgenommenen Zustand der Deckel (58, 60) der Blick auf den halbdurchlässigen Spiegel (16) und der Zugriff auf die Kamera (10) freigegeben sind.

11. System nach Anspruch 10, **dadurch gekennzeichnet,**
- **dass** die abnehmbaren Deckel (58, 60) Fächer (62, 64, 66, 68, 70) aufweisen und
- **dass** die Fächer (62, 64, 66, 68, 70) durch Abdeckklappen (72, 74) abdeckbar sind.

12. System nach einem der vorangehenden Ansprüche, **dadurch gekennzeichnet, dass** ein Raum (32) zwischen Kamera (10) und halbdurchlässigem Spiegel (16) gegen Lichteinfall auf anderem Wege als durch den Spiegel (16) geschützt ist.

13. System nach einem der vorangehenden Ansprüche, **dadurch gekennzeichnet, dass** aufgezeichnete Informationen mittels einer Videobearbeitungssoftware bearbeitet werden.

14. System nach einem der vorangehenden Ansprüche, **dadurch gekennzeichnet, dass** durch die Videobearbeitungssoftware bearbeitete Informationen mittels einer Videokompressionssoftware komprimiert werden.

15. System nach einem der vorangehenden Ansprüche, **dadurch gekennzeichnet, dass** eine Generatorsoftware zum Erzeugen einer Präsentation aus den aufgezeichneten Bild- beziehungsweise Videoinformationen, den aufgezeichneten Toninformationen und zusätzlichen Informationen vorgesehen ist.

16. Verfahren zum Verarbeiten von Informationen mit den Schritten
- Aufzeichnen von Bild- beziehungsweise Videoinformationen mit einer Kamera (10),
- Aufzeichnen von Toninformationen simultan zu dem Aufzeichnen der Bild- beziehungsweise Videoinformationen und
- Darstellen von Informationen auf einer einem Vortragenden (18) zugewandten Fläche (20) eines halbdurchlässigen Spiegels (16), wobei die Kamera (10) gegenüber einer von dem Vortragenden (18) abgewandten Fläche (22) des halbdurchlässigen Spiegels (16) angeordnet ist und
- wobei die darstellbaren Informationen graphische Informationen umfassen,
**dadurch gekennzeichnet,**
- **dass** die darstellbaren Informationen graphische Informationen umfassen,
- **dass** die darstellbaren Informationen eine gespiegelte Darstellung einer Computeranzeige (24) umfassen und
- **dass** die Computeranzeige (24) eine gespiegelte herkömmliche Computeranzeige (24) ist.

17. Verfahren nach Anspruch 16, **dadurch gekennzeichnet, dass** die Mittel zum Aufzeichnen digitale Informationen aufzeichnen.

18. Verfahren nach Anspruch 17, **dadurch gekennzeichnet, dass** die digitalen Informationen auf einem Magnetband in einer digitalen Kamera (10) aufgezeichnet werden.

19. Verfahren nach Anspruch 17, **dadurch gekennzeichnet, dass** die Computeranzeige (24) einem Computer (26) zugeordnet ist, der gleichzeitig zum digitalen Aufzeichnen und Verarbeiten der Bild- bzw. Videoinformationen und der Toninformationen dient.

20. Verfahren nach einem der Ansprüche 16 bis 19, **dadurch gekennzeichnet, dass** als Computeranzeige (24) ein TFT-Display verwendet wird.

21. Verfahren nach einem der Ansprüche 16 bis 20, **dadurch gekennzeichnet, dass** die Toninformationen unter Verwendung eines Funkmikrofons (12) und eines Funkempfängers (14) zum Zwecke des Aufzeichnens von Toninformationen übertragen werden.

22. Verfahren nach einem der Ansprüche 16 bis 21, **dadurch gekennzeichnet, dass** eine Promptersoftware vorgesehen ist, die durch eine Computermaus (28) gesteuert werden kann.

23. Verfahren nach einem der Ansprüche 16 bis 22, **dadurch gekennzeichnet, dass** über die Computermaus (28) unter Vermittlung der Promptersoftware Signale für die Aufzeichnung zur Verfügung gestellt werden können.

24. Verfahren nach einem der Ansprüche 16 bis 23, **dadurch gekennzeichnet, dass** aufgezeichnete Informationen mittels einer Videobearbeitungssoftware bearbeitet werden.

25. Verfahren nach einem der Ansprüche 16 bis 24, **dadurch gekennzeichnet, dass** durch die Videobearbeitungssoftware bearbeitete Informationen mittels einer Videokompressionssoftware komprimiert werden.

26. Verfahren nach einem der Ansprüche 16 bis 25, **dadurch gekennzeichnet, dass** eine Generatorsoftware zum Erzeugen einer Präsentation aus den aufgezeichneten Bild- beziehungsweise Videoinformationen, den aufgezeichneten Toninformationen und zusätzlichen Informationen vorgesehen ist.

27. Verfahren nach einem der Ansprüche 16 bis 26, **dadurch gekennzeichnet, dass** die zusätzlichen Informationen solche Informationen umfassen, die während der Aufzeichnung auf dem halbdurchlässigen Spiegel (16) dargestellt wurden.

28. Gehäuse zur Verwendung in einem System gemäß einem der Ansprüche 9 bis 15.
